# EUROPEAN PATENT APPLICATION

(11) **EP 2 594 530 A1**
(43) Date of publication of application: **22.05.2013**
(21) Application number: 11405358.0
(22) Date of filing: 17.11.2011
(51) Int. Cl.: C02F 1/00, C02F 1/44, B01D 61/18, B01D 63/00, B01D 65/02, B01D 69/10, B01D 69/12

(54) **Water purification device and method for operating a water purification device**

(71) Applicant: Creaholic SA, 2503 Biel (CH)
(72) Inventor: Mock, Elmar, 2013 Colombier (CH)
(74) Representative: Frei, Alexandra Sarah

(57) **Abstract**

A water purification device comprises a water collecting device (1) having a surface defining a variable volume and comprising a filter membrane (2) permeable to water. The device comprises an expansion device for exerting a force for increasing the volume of the water collecting device (1) and thereby drawing water through the filter membrane (2) into the water collecting device (1). The expansion device comprises a support structure (7) supporting the filter membrane (2), wherein the support structure (7) can be elastically deformed and is designed to settle snap, after being deformed, into one of at least two discrete stable configurations, a first one of these stable configurations being a low volume configuration of the support structure (7), a second one of these stable configurations being a high volume configuration of the support structure (7).

## Description

The invention relates to the field of water purification devices, in particular to a low-cost, small scale purification device, and a method for operating a water purification device as described in the preamble of the corresponding independent claims.

Access to clean water is an essential human necessity. In developing countries, in emergency situations, and simply for outdoor activities, there is a need for simple, lightweight, and cheap water purification devices. WO 2009/073994 A1 discloses an expandable water collecting device having a variable volume, wherein at least part of the surface of the water collecting device comprises a permeable filter area. The device further comprises an expansion means for exerting a force for increasing the volume of the water collecting device and thereby drawing water through the filter area into the water collecting device.

It is an objective of the invention to provide a water purification device of the type mentioned initially which is simple to manufacture and easy to operate, and a method for operating a water purification device.

These objectives are achieved by a water purification device and a method for operating a water purification device according to the corresponding independent claims.

The water purification device comprises a water collecting device having a surface defining a variable volume, wherein at least part of the surface of the water collecting device comprises a filter membrane the filter membrane being permeable to water and allowing water to enter the water collecting device in particular when the filter membrane is submerged in water. The device comprises an expansion device for exerting a force for increasing the volume of the water collecting device and thereby drawing water through the filter membrane into the water collecting device. The expansion device comprises a support structure supporting the filter membrane wherein the support structure can be elastically deformed and is designed to settle, after being deformed, into one of at least two discrete stable configurations, a first one of these stable configurations being a low volume configuration of the support structure a second one of these stable configurations being a high volume configuration of the support structure. This provides a simple mechanism in which the support structure fulfils the dual function of providing support for the membrane and for expanding the volume of the water collecting device, and optionally also the further function of storing and releasing energy for drawing water into the water collecting device.

When deforming the device from a first stable configuration into a second one, first work is performed by a first elastic deformation of the support structure, increasing potential energy stored in the support structure, and then by a different, second elastic deformation of the support structure, which is not the inverse of the first elastic deformation, potential energy is released by the support structure. The second elastic deformation corresponds to the support structure relaxing, settling or snapping into the second stable configuration. Simply put, states or shapes of the support structure corresponding to different stable configurations are separated by local maxima of the potential energy stored in the support structure. In a related embodiment, the filter membrane or part of the filter membrane is resilient, and the abovementioned effects from potential energy being stored and released by elastic deformation of the support structure involve the combination of the support structure and the (partly) resilient filter membrane, or the (partly) resilient filter membrane alone.

In an embodiment, the volume of the water collecting device is defined by a flexible sheet material. This allows to provide a large area for filtering, covering large parts of the surface of the water collecting device and thereby increasing the flow rate through the filter. It further allows to manufacture an entire container for the volume of filtered water from a sheet material, preferably from one or two pieces, simplifying its construction. The entirety of the sheet material defining the container can be manufactured of the filter membrane, or only part of the surface of the container, with the remaining part of the surface of the container being manufactured from another flexible sheet material or from a stiffer material and/or from the support structure. In the latter case, the filter membrane can be arranged to cover only openings between struts or bars of the support structure. Membranes can be made of several layers with different functions, porosity and surface treatment.

In an embodiment, the support structure is bistable, that is, it has exactly two stable configurations, in particular a low volume and a high volume configuration. This allows for simple operation of the device.

In an embodiment, the stable configurations are defined by the spatial configuration of different sections of the support structure. The support structure is maintained in the stable configurations by the elasticity of the sections of the support structure. Thus, the elasticity of the support structure forces the shape of the support structure, from a shape or state of maximal potential energy, to the different stable configurations. This provides for a particularly simple support structure in that no additional elements are required, for example, when the shape of the support structure corresponds to the volume of the container, as defined by the filter membrane.

In an embodiment, the volume of the support structure is maintained in one or more of the stable configurations by one or more holding or locking elements, for example, a clip, a clasp, a buckle, a latch, a hook, a spring lock, a band or belt or string, etc. Such a holding or locking element can be manually operated, after the support structure is brought to a particular configuration, to hold the support structure in this configuration. Such a holding or locking element can be a separate part or can be shaped as part of the support structure or can be attached, e.g. welded or moulded, to the support structure.

In an embodiment, the filter membrane is arranged inside the support structure and preferably the filter membrane is glued or welded against the support structure, or snapped into the support structure, or clamped, overmoulded, or encapsulated by the support structure. This allows for the support structure to protect the filter membrane against mechanical damage.

In an embodiment, the filter membrane, especially when arranged inside the support structure, is detachably attached to the support structure, for example, by hooks, screws, clamps, hook-and-loop fasteners (such as Velcro®), or straps or by a snap fit. Attachment can be at the edges and/or the struts and/or the outlet and/or a neck leading to the outlet. This allows to re-use the same support structure with several membranes. A snap fit may be established, for example, by elements as used in Minigrip® reclosable plastic bags. Such elements can be arranged on the inside of the support structure, with counterpart elements on the filter membrane.

In one embodiment, two sheets of the filter membrane (or more sheets, depending on how the filter membrane is folded) are sandwiched between the top part and the bottom part, all these four elements being essentially of congruent shape and placed congruently onto each other, and these four elements are tightly connected, e.g. welded, together along an outer edge.

Alternatively, the support structure can be arranged inside the filter membrane. In this case it is not necessary to attach the filter membrane to the support structure.

The filter membrane itself, in an embodiment, comprises a hydrophilic coating or surface on the outside and a hydrophobic coating or surface on the inside. This can assist in driving the flow of water into the volume inside the filter membrane.

In an embodiment, the elastic deformation of the support structure is reversible and the support structure can change repeatedly between its different stable configurations. This allows to reuse the water collecting device to filter and collect water multiple times, emptying the device after each use through an outlet. The outlet can be combined with or constitute one of the elements of the support structure.

In an embodiment, the water collecting device comprises a watertight outer envelope in which the water collecting device can be arranged. The outer envelope can be welded or otherwise attached to the water collecting device, or can be a loose component. If the outer envelope is attached to the water collecting device, it may be either put over the water collecting container or pulled back to expose the water collecting device for filtering (when immersed in water) or for cleaning the filter area. When the outer envelope is arranged to contain the water collecting device, it can preferably be closed around the water collecting device, e.g. by a minigrip®-like sealing mechanism. In another application of the water collecting device, the filtration device is not submerged as a whole, but the outer envelope is filled with water, and the water collecting device expands within the outer envelope, drawing in the water from the outer envelope.

In an embodiment, when the support structure is in the high volume configuration and the volume or the container of the water collecting device is in an intermediate state, the volume of the water collecting device is moved towards a high volume state of the water collecting device. Thus, in both the intermediate state and the high volume state of the volume or the container, the support structure is in the same stable configuration, but changes its shape within the limits of this configuration. In particular, it changes its shape by lowering the potential energy of the support structure, expanding the container and drawing water into the container. Deforming the support structure and subsequently letting the container expand is preferably done with the water collecting device submerged in or surrounded by water.

In an embodiment, the volume of the water collecting device is moved towards the high volume state by means of the elasticity of the support structure itself. This allows for a very simple construction of the device with few parts.

In an embodiment, the volume of the water collecting device is moved towards the high volume state by means of the elasticity of one or more resilient elements resiliently connecting the support structure to the filter membrane. This can allow to rapidly deform the support structure to the high volume state and then letting the container expand over a longer time period, during which time period, for example, no external force need to be applied the device, e.g. by hand.

In an embodiment, in the low volume configuration of the support structure, the support structure comprises two flat, essentially parallel parts, a top part and a bottom part connected along a connection area, for example, along edges of the top and bottom part, for example by welding or gluing. In the high volume configuration a top section of the top part and a bottom section of the bottom part are distanced from each other and are joined by at least one lateral section of the support structure, the lateral section comprising the remaining sections of the top part and bottom part. This allows for a simple and cheap construction of the device.

In an embodiment, the top part and bottom part are made of plastic material and the sections, of the support structure are joined by deformable sections such as film hinges or integral hinges. This allows to bias the deformation of the support structure towards the desired high volume configuration when a force is exerted on the water collecting device.

In other embodiments, the top and/or bottom part are made of or comprise a metal material such as steel, or an organic material such as bamboo, palm leaves, wood or the like, which can be impregnated or combined with a plastic material.

The method for operating a water purification device uses the water purification device comprising a water collecting device having a surface defining a variable volume, wherein at least part of the surface of the water collecting device comprises a filter membrane, the filter membrane being permeable to water and allowing water to enter the water collecting device. The device comprises an expansion device for exerting a force for increasing the volume of the water collecting device and thereby drawing water through the filter membrane into the water collecting device. The expansion device comprises a support structure supporting the filter membrane. The method comprises the steps of, beginning with the support structure being in a first stable, low volume configuration,
■ elastically deforming the support structure; and
■ allowing the support structure to settle into a second stable, high volume configuration.

Preferably, during or at least after elastically deforming the support structure, the water collecting device is submerged at least partially in water and thereby draws water through the filter membrane into the water collecting device.

In a variant of the method, the support structure in the first stable configuration comprises planar parts in a flat arrangement, and the step of elastically deforming the support structure comprises
■ elastically bending sections of the support structure
■ folding sections of the support structure relative to each other; and
■ folding the support structure as a whole into a stable spatial arrangement.
   After folding the support structure into this stable spatial arrangement, its shape is stabilised by the force exerted by the elastically deformed sections

In a further variant of the method, the support structure in the low volume configuration comprises two flat, parallel parts, a top part and a bottom part connected at edges, and the method comprises the steps of,
■ elastically deforming the support structure by manually pressing at least two edges at opposing sides of the water collecting device towards each other;
■ thereby moving a top section of the top part and a bottom section of the bottom part away from each other and increasing the volume of the water collecting device.

In other variants of the method, the step of elastically deforming the support structure comprises a weight or a spring driving the deformation.

The water collecting device can be brought back to the initial low volume shape after it has been emptied. Alternatively, this is done with the device still containing water. Then a reverse flow through the filter membrane takes place, causing a back-flushing and rinsing of the filter membrane.

Further embodiments are evident from the dependent patent claims. Features of the method claims may be combined with features of the device claims and vice versa.

The subject matter of the invention will be explained in more detail in the following text with reference to exemplary embodiments which are illustrated in the attached drawings, in which:
- Figure 1 a: shows a top part of a support structure of a water collecting device;
- Figure 1b: shows an enlarged cross section thereof, with a film hinge;

- Figure 2: shows a corresponding bottom part;
- Figure 3: shows a perspective view of a water collecting device in a high volume state;
- Figures 4a-c: show cross sections of a water collecting device in different states in one embodiment; and
- Figure 5: shows a cross section of another embodiment of the water collecting device in an intermediate state.

The reference symbols used in the drawings, and their meanings, are listed in summary form in the list of reference symbols. In principle, identical parts are provided with the same reference symbols in the figures.

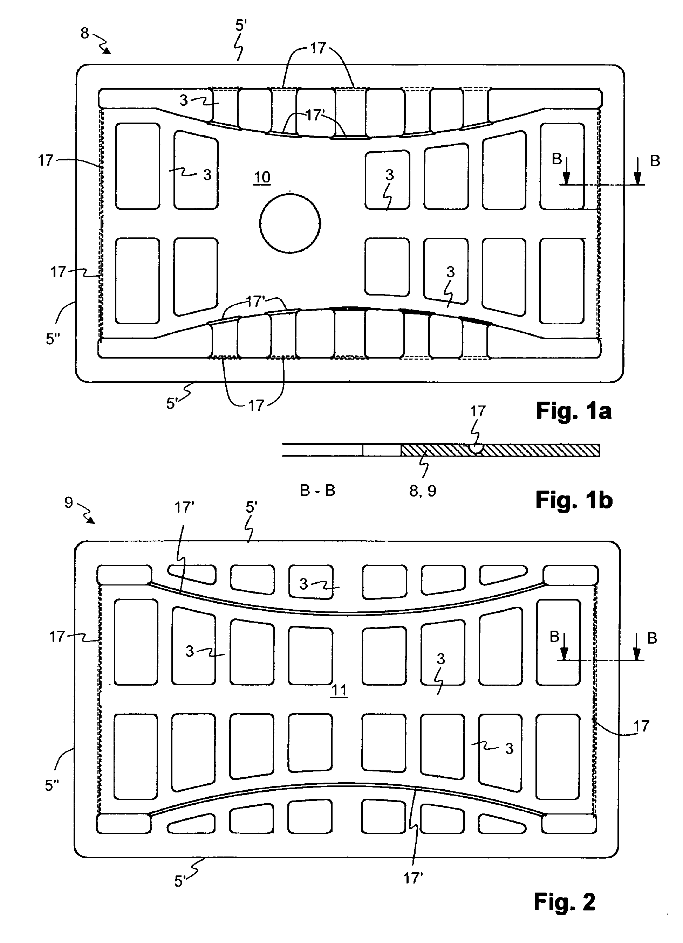

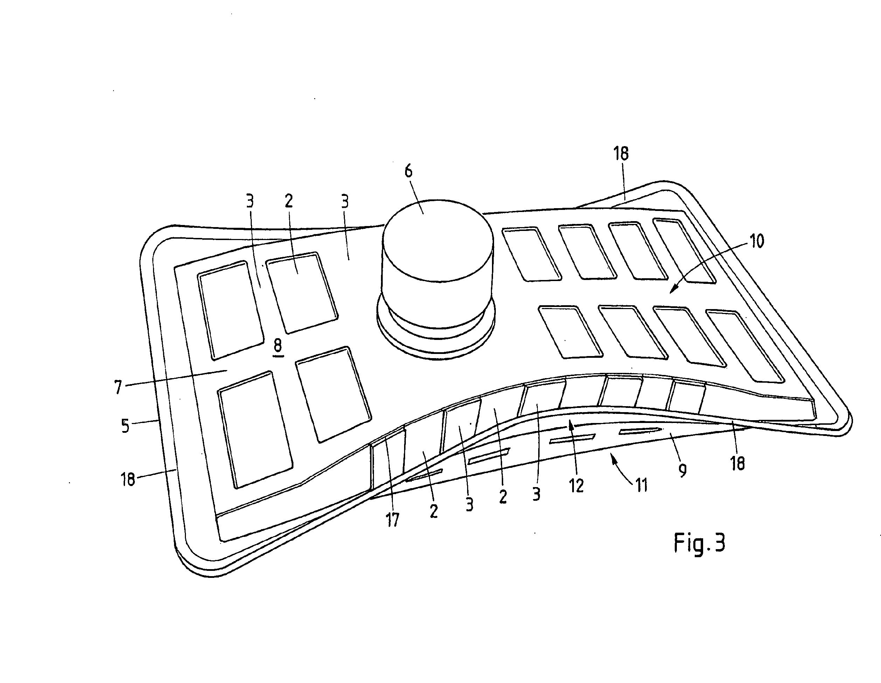

**Figure 1a** shows a top part 8 of a support structure 7 of a water collecting device 1, and **Figure 2** shows a corresponding bottom part 9. **Figure 1b** shows an enlarged cross section of the parts, with a film hinge created by an indentation or groove 17. The parts 8, 9 are essentially of rectangular shape. They comprise bars or struts 3 and openings between the struts. At places where the parts 8, 9 are to be folded, straight or curved grooves 17 defining the film hinges are arranged. Depending on the side of the part 8, 9 on which the grooves 17 are arranged, the corresponding film hinge is biased to bend inwards or outwards when a force in the plane of the part 8, 9 is applied in a direction perpendicular to the direction of the groove 17. Curved grooves 17' define sections of the top part 8 and bottom part 9 having the shape of a rectangle with two opposing sides bent inward towards each other. These sections shall be called top section 10 and bottom section 11, respectively. The top part comprises an opening for an outlet 6, shown in Figure 3.

The parts 8, 9 are flat and made of recyclable material and preferably of plastic, e.g. by stamping or cutting from a sheet, or by milling or moulding. They have a thickness of e.g. 0.5 mm to 2 mm, depending on the strength and stiffness of the material and on the size of the water collecting device 1. The water collecting device 1 comprises the top part 8 and bottom part 9 connected to each other at their edges 5', 5" by gluing or welding at welding seams 18 and attached to a filter membrane 2 that forms a container of variable volume for collecting the filtered water. The filter membrane 2 is attached to inside surfaces of the support structure 7, i.e. of the top part 8 and bottom part 9. The filter membrane 2 can be welded against the top and bottom part 8, 9 at the same welding seams 18 already mentioned.

In an alternative embodiment, not shown, the filter membrane 2 is arranged at the outside of the support structure 7.

In another alternative embodiment not shown, the filter membrane is detachably attached to the support structure. For this purpose, for example, straps are attached to the filter membrane 2, and the filter membrane is attached to the support structure 7 by means of these straps being tied to the struts 3.

In a low volume state of the water collecting device 1, the support structure 7 is in a low volume configuration, preferably with the parts 8, 9 being in a flat arrangement in which they are flat and parallel to each other. In this configuration, the water collecting device 1 can be stored and transported in a space-saving manner.

**Figure 3** shows a perspective view of a water collecting device 1 in a high volume state. The top section 10 of the top part 8 and the bottom section 11 of the bottom part 9 each are bent into a convex shape and are distanced from each other, resulting in the volume between them and in the filter membrane 2 being increased relative to the low volume state. Further sections of the top part 8 and bottom part 9, at opposing sides of the water collecting device 1, are folded inwards and become lateral sections 12 of the support structure 7. The lateral sections 12 are lens shaped (or almond shaped, or "vesica piscis", i.e. fish bladder shaped) and are folded inwards from the top part 8 and bottom part 9 along the curved grooves 17' and are bent in three dimensions into a concave shape. An outlet 6 is arranged in the top section 10, but could be arranged in other sections as well. The outlet 6 can comprise a repeatedly openable and closeable closing device, such screw cap, snap on lid, elastic valve, duck-bill valve, etc.

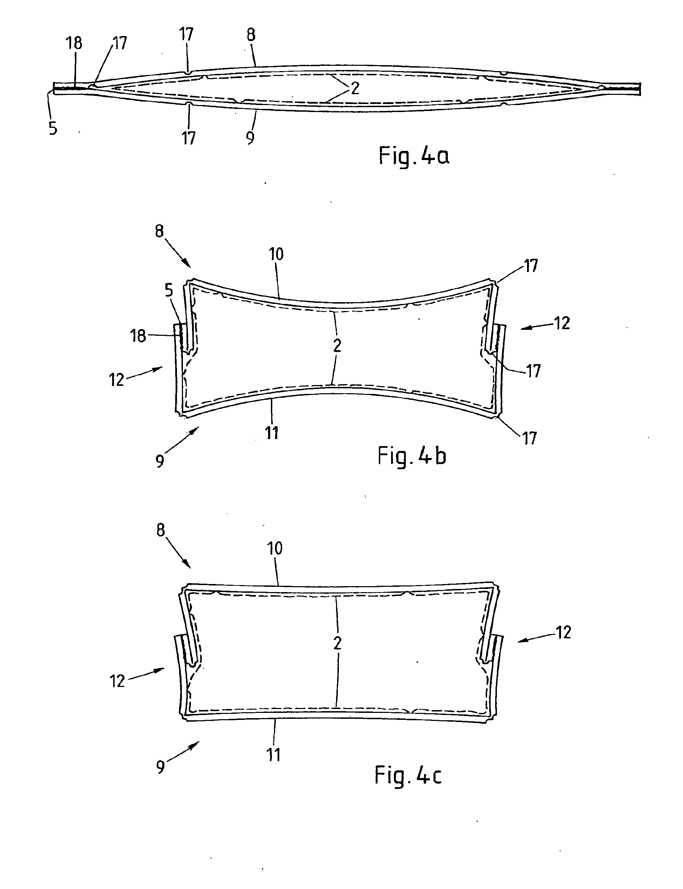

In order to transform the water collecting device 1 from the low to the high volume state, the parts 8, 9 are held in the flat arrangement, which defines a plane essentially parallel to the parts 8, 9 (**Figure 4a**). The parts 8, 9 are then deformed - preferably by hand - by applying an inward force, parallel to the plane, to a pair of first edges 5', at the sections that are to become the lateral sections 12. Due to the biasing of the grooves 17, these sections will buckle inwards and push the top section 10 and bottom section 11 away from each other. The top section 10 and bottom section 11 fold away from each other at hinges defined by grooves 17 parallel to second edges 5". If the first edges 5', which now run approximately along a middle axis of the lateral sections 12, are pushed close enough towards each other, the support structure 7 will settle or snap into a stable configuration (Figure 4b). It will remain in that stable configuration until, for example, the first edges 5' are pulled apart and/or the top section 10 and bottom section 11 are pushed towards each other.

According to one embodiment, the water collecting device 1 is brought into the high volume state while it is at least partially submerged in water. In the course of the increase of the volume inside the filter membrane 2, the water seeps through the filter membrane 2 into the volume and is filtered. Since the flow rate of the water is limited, the volume increase of the container is limited as well, and the top section 10 and bottom section 11, being attached to the filter membrane 2, may be bent inwards, when seen a cross section parallel to the driving force (i.e. perpendicular to the first edges 5', see **Figure 4b**). After the support structure 7 is in the stable high volume configuration (**Figure 4b**), the lateral sections 12 must not necessarily be pressed towards each other anymore, and the top section 10 and bottom section 11 may, due to their elasticity, straighten out again, causing more water to be sucked inward through the filter membrane 2. Finally, a cross section as in **Figure 4c** is reached.

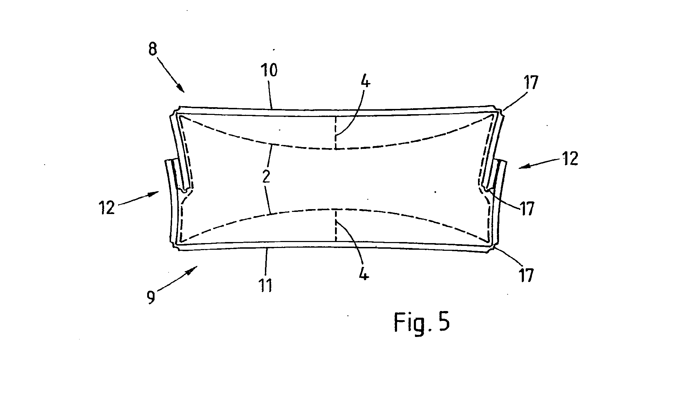

In another embodiment, the filter membrane 2 is not connected directly to the support structure 7 in all places, but is elastic itself and/or is, in some places, connected to the support structure 7 by means of one or more resilient elements 4. Consequently, when the support structure 7 is in the stable high volume configuration, there first may be a difference between the volume between the top section 10 and bottom section 11 and the volume of the filter membrane 2. This corresponds to the cross section of **Figure 5** taking the place of **Figure 4b**. Subsequently, the elasticity of the filter membrane 2 and/or the resilient element 4 pulls the filter membrane 2 outward towards the support structure 7, drawing more water inward through the filter membrane 2. Finally, the situation approximately as in **Figure 4c** is reached.

While the invention has been described in present embodiments, it is distinctly understood that the invention is not limited thereto, but may be otherwise variously embodied and practised within the scope of the claims.

## Claims

1. A water purification device, comprising a water collecting device (1) having a surface defining a variable volume, wherein at least part of the surface of the water collecting device comprises a filter membrane (2), the filter membrane (2) being permeable to water and allowing water to enter the water collecting device (1), wherein the device comprises an expansion device for exerting a force for increasing the volume of the water collecting device (1) and thereby drawing water through the filter membrane (2) into the water collecting device (1), wherein the expansion device comprises a support structure (7) supporting the filter membrane (2), **characterized in that** the support structure (7) can be elastically deformed and is designed to settle, after being deformed, into one of at least two discrete stable configurations, a first one of these stable configurations being a low volume configuration of the support structure (7), a second one of these stable configurations being a high volume configuration of the support structure (7).

2. The device of claim 1, wherein the volume of the water collecting device (1) is defined by a flexible sheet material.

3. The device of one of the preceding claims, wherein the support structure (7) has two stable configurations.

4. The device of one of the preceding claims, wherein the stable configurations are defined by the spatial configuration of different sections of the support structure (7) and the support structure (7) is maintained in the stable configurations by the elasticity of the sections of the support structure (7).

5. The device of one of the preceding claims, wherein the volume of the support structure is maintained in one or more of the stable configurations by one or more holding or locking elements.

6. The device of one of the preceding claims, wherein the filter membrane (2) is arranged inside the support structure (7), and preferably the filter membrane (2) is glued or welded against the support structure (7), or clamped, overmoulded or encapsulated by the support structure (7).

7. The device of one of the preceding claims, wherein the elastic deformation of the support structure (7) is reversible and the support structure (7) can change repeatedly between its different stable configurations.

8. The device of one of the preceding claims, wherein, when the support structure (7) is in the high volume configuration and the volume of the water collecting device (1) is in an intermediate state, the volume of the water collecting device (1) is moved towards a high volume state of the water collecting device (1).

9. The device of claim 8, wherein the volume of the water collecting device (1) is moved towards the high volume state by means of the elasticity of the support structure (7) itself.

10. The device of claim 8 or 9, wherein the volume of the water collecting device (1) is moved towards the high volume state by means of the elasticity of one or more resilient elements (4) resiliently connecting the support structure (7) to the filter membrane (2).

11. The device of one of the preceding claims, wherein, in the low volume configuration of the support structure (7), the support structure (7) comprises two flat, essentially parallel parts, a top part (8) and a bottom part (9), preferably connected along edges (5', 5"), and in the high volume configuration a top section (10) of the top part (8) and a bottom section (11) of the bottom part (9) are distanced from each other and are joined by at least one lateral section (12) of the support structure (7), the lateral section (12) comprising the remaining sections of the top part (8) and bottom part (9).

12. The device of claim 11, wherein the top part (8) and bottom part (9) are made of plastic material and the sections (10, 11, 12) of the support structure (7) are joined by film hinges.

13. A method for operating a water purification device wherein the water purification device comprises a water collecting device (1) having a surface defining a variable volume, wherein at least part of the surface of the water collecting device comprises a filter membrane (2), the filter membrane (2) being permeable to water and allowing water to enter the water collecting device (1), wherein the device comprises an expansion device for exerting a force for increasing the volume of the water collecting device (1) and thereby drawing water through the filter membrane (2) into the water collecting device (1), wherein the expansion device comprises a support structure (7) supporting the filter membrane (2), **characterized in that** the method comprises the steps of, beginning with the support structure (7) being in a first stable, low volume configuration,
• elastically deforming the support structure (7); and
• allowing the support structure (7) to settle into a second stable, high volume configuration.

14. The method of claim 13, wherein the support structure (7) in the first stable configuration comprises planar parts in a flat arrangement, and wherein the step of elastically deforming the support structure (7) comprises
• elastically bending sections (10, 11, 12) of the support structure (7),
• folding sections (10, 11, 12) of the support structure (7) relative to each other; and
■ folding the support structure (7) as a whole into a stable spatial arrangement.

15. The method of claim 13 or 14, with the support structure (7) in the low volume configuration comprising two flat, parallel parts, a top part (8) and a bottom part (9), connected at edges (5', 5"), the method comprising the steps of,
■ elastically deforming the support structure (7) by manually pressing at least two edges (5') at opposing sides of the water collecting device (1) towards each other;
■ thereby moving a top section (10) of the top part (8) and a bottom section (11) of the bottom part (9) away from each other and increasing the volume of the water collecting device (1).
